# DEMANDE DE BREVET EUROPEEN

(11) **EP 4 595 745 A1**
(43) Date de publication de la demande: **06.08.2025**
(21) Numéro de dépôt: 24155350.2
(22) Date de dépôt: 01.02.2024
(51) Int. Cl.: A01K 27/00

(54) **DISPOSITIF DE RETENUE D'UN ANIMAL**

(71) Demandeur: Vincent, Pierre-Alexandre, 7880 Flobecq (BE)
(72) Inventeur: Vincent, Pierre-Alexandre, 7880 Flobecq (BE)
(74) Mandataire: Cabinet Poncet

(57) **Abrégé**

Dispositif de retenue (1) d'un animal, comprenant des premiers moyens d'accrochage (3) réversibles destinés à être sélectivement accrochés à des deuxièmes moyens d'accrochage (4), dans lequel :
- les premiers moyens d'accrochage (3) comportent une pluralité de mors (3a, 3b) agencés de façon concentrique autour d'une direction longitudinale (I-I), aptes à être disposés dans une première position dite de retenue et une deuxième position dite de libération telle que les deuxièmes moyens d'accrochage (4) peuvent échapper hors des premiers moyens d'accrochage (3) par un simple mouvement de translation,
- les premiers (3) et deuxièmes (4) moyens d'accrochage sont conformés de façon à présenter, en position de retenue, une surface de contact mutuel au moins sensiblement en forme de zone sphérique (ZS).

## Description

### DOMAINE TECHNIQUE DE L'INVENTION

La présente invention concerne le domaine des animaux de compagnie, et concerne plus particulièrement un dispositif de retenue d'un animal.

On connaît des dispositifs de retenue d'un animal selon le préambule de la revendication 1, comme par exemple ceux décrits dans les documents WO 90/05450 A1 et US 5,103,771 A. Un tel dispositif de retenue débrayable est conformé pour assurer une continuité de liaison mécanique entre une portion d'extrémité proximale, adaptée pour être tenue par la main d'un utilisateur, et un élément d'attache adapté pour être fixé à un animal. Le dispositif de retenue comprend en outre des moyens de libération actionnables par l'utilisateur pour libérer sélectivement l'élément d'attache vis-à-vis de la partie d'extrémité proximale. Pour cela, des surfaces de contact respectives sont conformées dans un tronçon intermédiaire entre des premiers moyens d'accrochage et des deuxièmes moyens d'accrochage.

Dans ces dispositifs de retenue, les tractions répétées de l'animal conjuguées aux surfaces de contact très réduites induisent des concentrations de contraintes sur leurs éléments constitutifs menant assez rapidement à un matage des surfaces entraînant des dysfonctionnements, ou menant même à une rupture de leurs éléments constitutifs. Cet inconvénient est accru lorsque l'animal est un animal puissant, tel que par exemple un chien d'intervention d'une unité de police ou de gendarmerie cynophile.

### EXPOSE DE L'INVENTION

Un problème proposé par la présente invention est de fournir un dispositif de retenue d'un animal permettant de limiter les risques de défaillances.

Pour atteindre ces objets ainsi que d'autres, l'invention propose un dispositif de retenue d'un animal, comprenant :
- un élément de tenue s'étendant entre une portion d'extrémité proximale, adaptée pour être tenue par la main d'un utilisateur, et une portion d'extrémité distale comportant des premiers moyens d'accrochage réversibles destinés à être sélectivement accrochés à des deuxièmes moyens d'accrochage,
- un élément d'attache destiné à être solidarisé à un mousqueton, à un collier ou à un harnais pour animal, et comportant les deuxièmes moyens d'accrochage destinés à être accrochés de façon réversible aux premiers moyens d'accrochage ; selon l'invention :
- les premiers moyens d'accrochage comportent une pluralité de mors agencés de façon concentrique autour d'une direction longitudinale, aptes à être disposés dans une première position dite de retenue, dans laquelle lesdits mors sont situés à une première distance radiale de la direction longitudinale et sont conformés pour retenir entre eux les deuxièmes moyens d'accrochage, et une deuxième position dite de libération, dans laquelle lesdits mors sont situés à une deuxième distance radiale de la direction longitudinale, la deuxième distance radiale étant supérieure à la première distance radiale et telle que les deuxièmes moyens d'accrochage peuvent échapper hors des premiers moyens d'accrochage par un simple mouvement de translation,
- les premiers et deuxièmes moyens d'accrochage sont conformés de façon à présenter, en position de retenue, une surface de contact mutuel au moins sensiblement en forme de zone sphérique.

Le fait de prévoir un contact mutuel selon une surface au moins sensiblement en forme de zone sphérique permet d'augmenter de façon significative ladite surface de contact. Cela permet de réduire efficacement les concentrations de contraintes, et donc de réduire les risques de dysfonctionnements et de dégradation (voire de rupture).

Avantageusement, les premiers et deuxièmes moyens d'accrochage peuvent être conformés de façon à présenter, en position de retenue, une surface de contact mutuel entre les premiers moyens d'accrochage et les deuxièmes moyens d'accrochage réalisant une liaison rotule lorsque les deuxièmes moyens d'accrochage sont retenus par les premiers moyens d'accrochage.

La liaison rotule procure une liberté de mouvements en rotation selon trois axes distincts, et permet là encore de réduire les contraintes entre les premiers et deuxièmes moyens d'accrochage.

De préférence, les premiers et deuxièmes moyens d'accrochage peuvent être conformés de façon à présenter, en position de retenue, une surface de contact mutuel sensiblement sphérique.

Avantageusement, on peut prévoir que les deuxièmes moyens d'accrochage comprennent un organe d'accrochage s'étendant entre une première extrémité et une deuxième extrémité avec :
- un premier tronçon d'organe d'accrochage dont la section transversale augmente depuis ladite première extrémité vers ladite deuxième extrémité, le premier tronçon comportant de préférence une forme de segment sphérique,
- un deuxième tronçon d'organe d'accrochage prolongeant le premier tronçon en direction de la deuxième extrémité, dont la section transversale diminue depuis ledit premier tronçon vers ladite deuxième extrémité.

Le premier tronçon d'organe d'accrochage permet de procurer une surface de contact augmentée pour assurer une retenue efficace des deuxièmes moyens d'accrochage par les premiers moyens d'accrochage tout en réduisant efficacement les concentrations de contraintes. Un tel premier tronçon d'organe d'accrochage permet également la réalisation d'une liaison rotule par coopération avec les mors des premiers moyens d'accrochage.

Le deuxième tronçon d'organe d'accrochage permet quant à lui de faciliter l'engagement de l'organe d'accrochage des deuxièmes moyens d'accrochage entre les mors des premiers moyens d'accrochage, par un centrage et un guidage facilités du deuxième tronçon d'organe d'accrochage lors de son insertion entre les mors des premiers moyens d'accrochage.

Avantageusement, on peut prévoir que :
- des premiers moyens de rappel élastiques rappellent en permanence lesdits plusieurs mors vers leur position de libération,
- l'élément de tenue comprend un manchon de verrouillage, agencé de façon coulissante selon la direction longitudinale sur un corps longitudinal de base, entre :
   a. une première position dite de verrouillage, dans laquelle ledit manchon de verrouillage est à une première distance d'une extrémité distale de la portion d'extrémité distale selon la direction longitudinale et recouvre lesdits mors disposés en position de retenue et s'oppose à tout déplacement radial des mors vers leur position de libération,
   b. une deuxième position dite de déverrouillage, dans laquelle ledit manchon de verrouillage est à une deuxième distance de l'extrémité distale de la portion d'extrémité distale selon la direction longitudinale, supérieure à ladite première distance, et autorise un déplacement radial des mors vers leur position de libération.

Une telle structure est simple à fabriquer, simple à manipuler, robuste et fiable. Le déplacement par l'utilisateur du manchon de verrouillage vers sa position de déverrouillage suffit à libérer les deuxièmes moyens d'accrochage.

Le coulissement du manchon de verrouillage étant sensiblement perpendiculaire au mouvement des mors se déplaçant vers leur position de libération, les tractions (même fortes) de l'animal induisant un mouvement des mors vers leur position de libération ont très peu de chances de provoquer une ouverture intempestive des mors.

De préférence, on peut prévoir que :
- des deuxièmes moyens de rappel élastiques rappellent en permanence ledit manchon de verrouillage vers sa position de verrouillage et à recouvrement des mors, selon une force de rappel qui est suffisante pour amener les mors vers leur position de retenue à l'encontre des premiers moyens de rappel élastiques,
- des moyens de déplacement, manuellement actionnables, permettent à un utilisateur de sélectivement déplacer le manchon de verrouillage vers sa position de déverrouillage à l'encontre des deuxièmes moyens de rappel élastiques.

Le rappel permanent du manchon de verrouillage vers sa position de verrouillage permet de faciliter l'accouplement des premiers et deuxièmes moyens d'accrochage : l'utilisateur a seulement besoin de relâcher le manchon de verrouillage après avoir introduit les deuxièmes moyens d'accrochage entre les mors des premiers moyens d'accrochage.

Avantageusement, le corps longitudinal de base peut comporter un épaulement en direction duquel est coulissé le manchon de verrouillage lorsque le manchon de verrouillage est déplacé vers sa position de déverrouillage, ledit épaulement comportant de préférence une section transversale avec au moins une dimension transversale sensiblement égale ou supérieure à une dimension d'une section transversale du manchon de verrouillage.

L'épaulement permet à l'utilisateur de tenir le corps longitudinal de base entre la paume d'une de ses mains et son auriculaire (et/ou son annulaire) tandis qu'il utilise son index et son pouce de la même main pour tenir le manchon de verrouillage et le coulisser vers sa position de déverrouillage. L'utilisateur peut alors utiliser son autre main pour introduire les deuxièmes moyens d'accrochage entre les mors des premiers moyens d'accrochage.

De préférence, chaque mors peut être articulé à pivotement sur le corps longitudinal de base autour d'une direction de pivotement perpendiculaire à la direction longitudinale. Une telle articulation des mors est simple, robuste et fiable.

Dans une première variante, l'élément de tenue peut comporter une sangle souple s'étendant à l'écart de la portion d'extrémité distale de l'élément de tenue jusqu'à une extrémité libre, et comportant de préférence une boucle fermée à son extrémité libre. La sangle permet de retenir un animal à une distance maximale prédéterminée de l'utilisateur avant son éventuelle libération volontaire par l'utilisateur.

Dans une deuxième variante, l'élément de tenue peut comporter une tige s'étendant à l'écart de la portion d'extrémité distale de l'élément de tenue jusqu'à une extrémité libre, et comportant de préférence une boucle fermée à son extrémité libre. La tige présente une rigidité suffisante pour permettre un maintien de l'animal à une distance minimale prédéterminée de l'utilisateur, tout en gardant l'animal à une distance maximale prédéterminée de l'utilisateur, avant son éventuelle libération volontaire par l'utilisateur.

Avantageusement, le dispositif de retenue peut comporter un lien souple dont une première extrémité est fixée au manchon de verrouillage, qui est agencé à coulissement le long de l'élément de tenue et qui comporte à une deuxième extrémité un organe de préhension se présentant de préférence sous la forme d'une boucle fermée. L'utilisateur peut ainsi déplacer le manchon de verrouillage vers sa position de déverrouillage tout en étant situé à distance du manchon de verrouillage, ce qui lui permet de maintenir son attention sur d'autres éléments de l'environnement.

De préférence, l'élément de tenue peut comporter un passage interne selon sa longueur dans lequel chemine le lien souple, la deuxième extrémité du lien souple étant de préférence située à proximité immédiate de l'extrémité libre de la sangle souple ou de la tige. Le lien souple se trouve ainsi abrité à l'intérieur de l'élément de tenue, ce qui limite efficacement les risques de dégradation dudit lien souple.

Avantageusement, l'élément d'attache peut être solidaire de façon inséparable d'un mousqueton, d'un collier ou d'un harnais pour animal.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective d'un premier mode de réalisation de dispositif de retenue selon la présente invention ;
[Fig.2] La figure 2 est une vue de détail et en perspective d'une extrémité proximale du dispositif de retenue de la figure 1 ;
[Fig.3] La figure 3 est une vue en coupe longitudinale partielle du dispositif de retenue de la figure 1, sur laquelle des mors sont en une première position dite de retenue ;
[Fig.4] La figure 4 est une autre vue de détail et en perspective de l'extrémité proximale du dispositif de retenue de la figure 1 ;
[Fig.5] La figure 5 est une vue en coupe longitudinale partielle du dispositif de retenue de la figure 1, sur laquelle des mors sont en une deuxième position dite de libération ;
[Fig.6] La figure 6 est une vue en perspective d'un élément d'attache solidaire d'un mousqueton, utilisé dans le dispositif de retenue de la figure 1 ;
[Fig.7] La figure 7 est une vue en perspective d'un deuxième mode de réalisation de dispositif de retenue selon la présente invention ; et
[Fig.8] La figure 8 est une vue en perspective d'un élément d'attache solidaire d'un collier pour animal, utilisé dans le dispositif de retenue de la figure 7.

### DESCRIPTION DES MODES DE REALISATION PREFERES

Lorsque des références numériques identiques sont utilisées dans plusieurs figures, modes de réalisation ou variantes de l'invention, ces références numériques désignent des éléments identiques ou similaires dans chacun(e) des figures, modes de réalisation ou variantes.

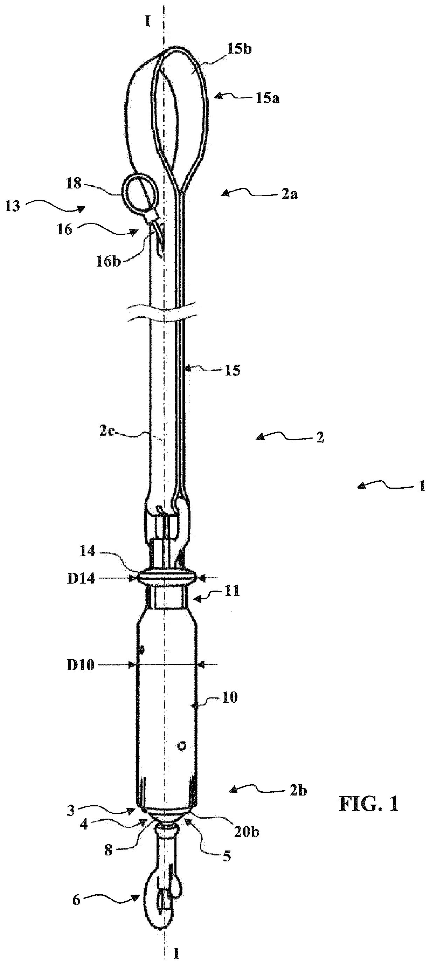

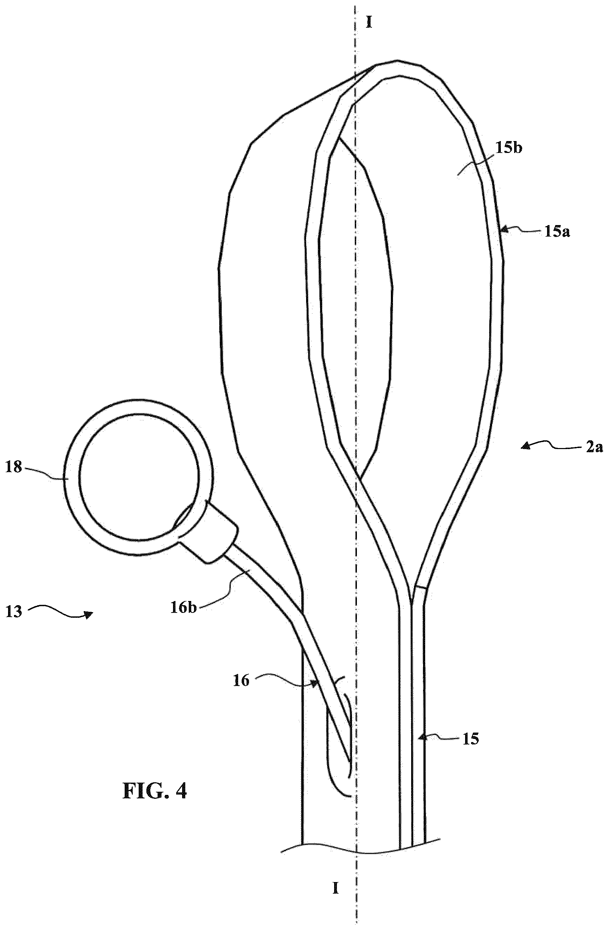

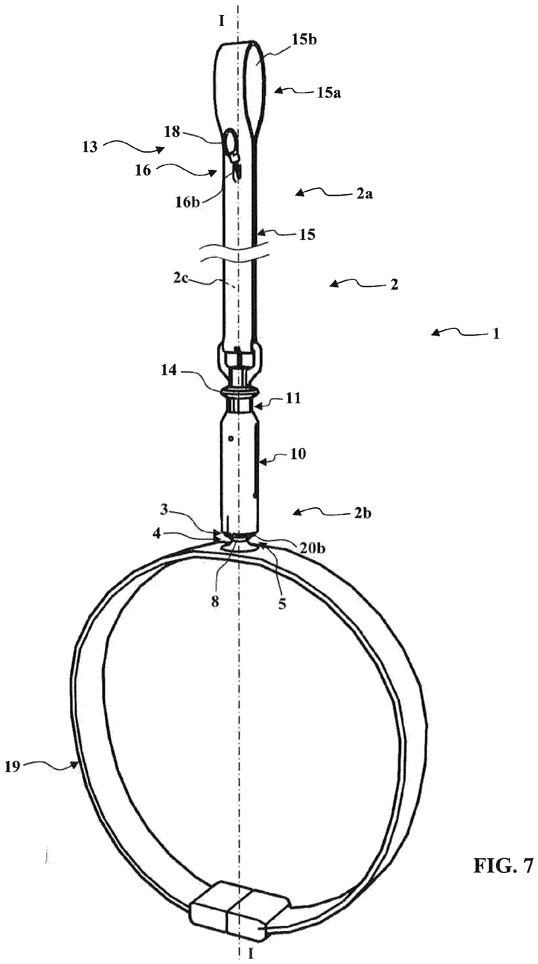

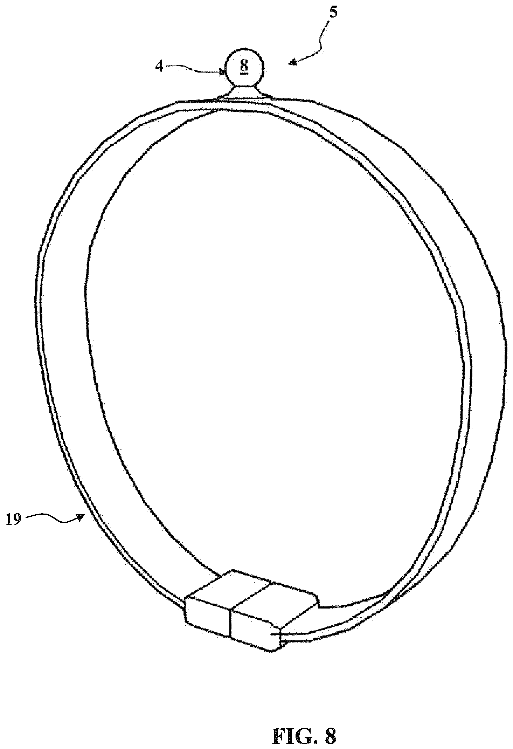

Sur les figures 1 à 6 d'une part et sur les figures 7 et 8 d'autre part sont respectivement illustrés deux modes de réalisation d'un dispositif de retenue 1 pour animal selon la présente invention.

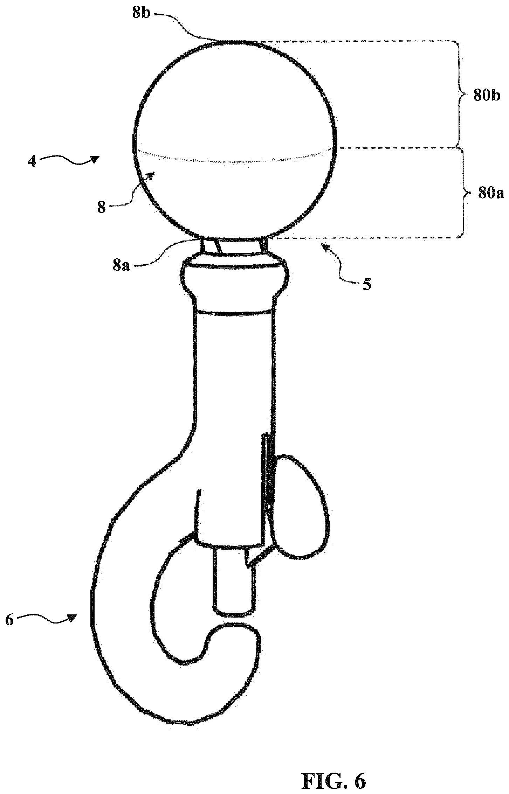

Le dispositif de retenue 1 comprend :
- un élément de tenue 2 s'étendant entre une portion d'extrémité proximale 2a, adaptée pour être tenue par la main d'un utilisateur, et une portion d'extrémité distale 2b comportant des premiers moyens d'accrochage 3 réversibles destinés à être sélectivement accrochés à des deuxièmes moyens d'accrochage 4,
- un élément d'attache 5 destiné à être solidarisé à un mousqueton 6 (figures 1 et 6), à un collier 19 (figures 7 et 8) ou à un harnais pour animal, et comportant les deuxièmes moyens d'accrochage 4 destinés à être accrochés de façon réversible aux premiers moyens d'accrochage 3.

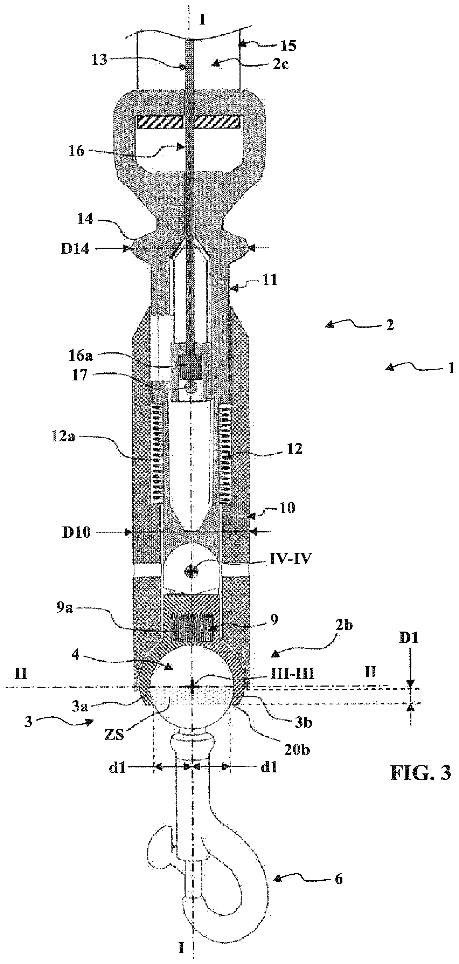

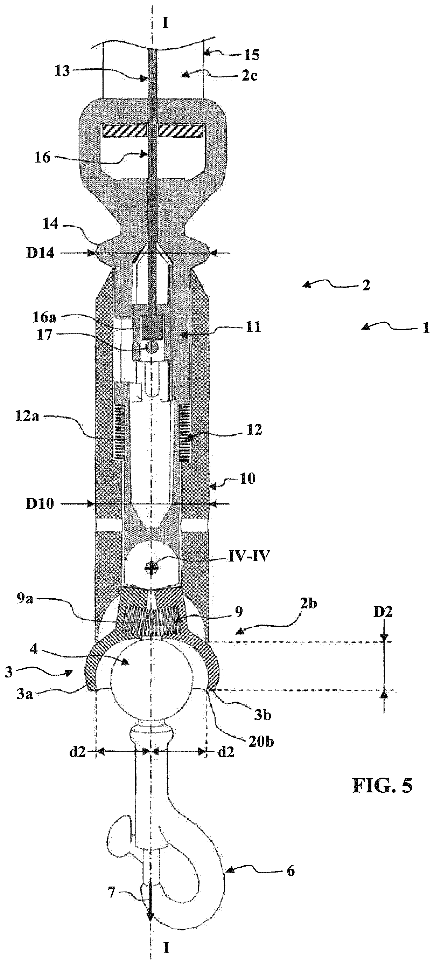

Les premiers moyens d'accrochage 3 comportent une pluralité de mors (ici deux mors 3a et 3b) agencés de façon concentrique autour d'une direction longitudinale l-l, aptes à être disposés dans une première position dite de retenue (figure 3), dans laquelle lesdits mors 3a et 3b sont situés à une première distance radiale d1 de la direction longitudinale l-l et sont conformés pour retenir entre eux les deuxièmes moyens d'accrochage 4, et une deuxième position dite de libération (figure 5), dans laquelle lesdits mors 3a et 3b sont situés à une deuxième distance radiale d2 de la direction longitudinale l-l, la deuxième distance radiale d2 étant supérieure à la première distance radiale d1 et telle que les deuxièmes moyens d'accrochage 4 peuvent échapper hors des premiers moyens d'accrochage 3 par un simple mouvement de translation (illustré par la flèche 7).

Les premiers 3 et deuxièmes 4 moyens d'accrochage sont conformés de façon à présenter, en position de retenue (figure 3), une surface de contact mutuel au moins sensiblement en forme de zone sphérique ZS.

Dans les modes de réalisation illustrés sur les figures, les premiers 3 et deuxièmes 4 moyens d'accrochage sont conformés de façon à présenter, en position de retenue (figures 1 et 3), une surface de contact mutuel entre les premiers moyens d'accrochage 3 et les deuxièmes moyens d'accrochage 4 réalisant une liaison rotule lorsque les deuxièmes moyens d'accrochage 4 sont retenus par les premiers moyens d'accrochage 3. En l'espèce, sur la figure 3, le mousqueton 6 peut pivoter autour de la direction longitudinale l-l, et autour de deux directions transversales II-II et III-III toutes distinctes.

Dans les modes de réalisation illustrés sur les figures, les premiers 3 et deuxièmes 4 moyens d'accrochage sont conformés de façon à présenter, en position de retenue, une surface de contact mutuel sensiblement sphérique.

On voit plus particulièrement sur la figure 6 que les deuxièmes moyens d'accrochage 4 comprennent un organe d'accrochage 8 s'étendant entre une première extrémité 8a et une deuxième extrémité 8b avec :
- un premier tronçon 80a d'organe d'accrochage 8 dont la section transversale augmente depuis ladite première extrémité 8a vers ladite deuxième extrémité 8b (le premier tronçon 80a comporte ici une forme de segment sphérique),
- un deuxième tronçon 80b d'organe d'accrochage 8 prolongeant le premier tronçon 80a en direction de la deuxième extrémité 8b, dont la section transversale diminue depuis ledit premier tronçon 80a vers ladite deuxième extrémité 8b.

De façon plus spécifique, l'organe d'accrochage 8 se présente sous la forme d'une boule avec des premier 80a et deuxième 80b tronçons en demi-boules. Les mors 3a et 3b comportent des surfaces internes à forme sensiblement complémentaire de la boule de l'organe d'accrochage 8.

On voit plus particulièrement sur les figures 3 et 5 que :
- des premiers moyens de rappel élastiques 9 (ici un ressort hélicoïdal 9a) rappellent en permanence lesdits plusieurs mors 3a et 3b vers leur position de libération (figure 5),
- l'élément de tenue 2 comprend un manchon de verrouillage 10, agencé de façon coulissante selon la direction longitudinale l-l sur un corps longitudinal de base 11, entre :
   a. une première position dite de verrouillage (figure 3), dans laquelle ledit manchon de verrouillage 10 est à une première distance D1 d'une extrémité distale 20b de la portion d'extrémité distale 2b selon la direction longitudinale l-l et recouvre lesdits mors 3a et 3b disposés en position de retenue et s'oppose à tout déplacement radial des mors 3a et 3b vers leur position de libération (figure 5),
   b. une deuxième position dite de déverrouillage (figure 5), dans laquelle ledit manchon de verrouillage 10 est à une deuxième distance D2 de l'extrémité distale 20b de la portion d'extrémité distale 2b selon la direction longitudinale l-l, supérieure à ladite première distance D1, et autorise un déplacement radial des mors 3a et 3b vers leur position de libération (figure 5).

Toujours sur les figures 3 et 5, on voit que :
- des deuxièmes moyens de rappel élastiques 12 (ici un ressort hélicoïdal 12a) rappellent en permanence ledit manchon de verrouillage 10 vers sa position de verrouillage (figure 3) et à recouvrement des mors 3a et 3b, selon une force de rappel qui est suffisante pour amener les mors 3a et 3b vers leur position de retenue (figure 3) à l'encontre des premiers moyens de rappel élastiques 9 (ici le ressort hélicoïdal 9a),
- des moyens de déplacement 13, manuellement actionnables, permettent à un utilisateur de sélectivement déplacer le manchon de verrouillage 10 vers sa position de déverrouillage (figure 5) à l'encontre des deuxièmes moyens de rappel élastiques 12.

Le corps longitudinal de base 11 comporte un épaulement 14 en direction duquel est coulissé le manchon de verrouillage 10 lorsque le manchon de verrouillage 10 est déplacé vers sa position de déverrouillage (figure 5), ledit épaulement 14 comportant de préférence une section transversale avec au moins une dimension transversale (ici un diamètre extérieur D14) sensiblement égale ou supérieure à une dimension d'une section transversale du manchon de verrouillage 10 (ici le diamètre extérieur D10).

Chaque mors 3a et 3b est articulé à pivotement sur le corps longitudinal de base 11 autour d'une direction de pivotement IV-IV perpendiculaire à la direction longitudinale l-l.

Dans le dispositif de retenue 1 illustré sur les figures, l'élément de tenue 2 comporte une sangle souple 15 proximale s'étendant à l'écart de la portion d'extrémité distale 2b de l'élément de tenue 2 jusqu'à une extrémité libre 15a, et comporte une boucle fermée 15b à son extrémité libre 15a.

En alternative, l'élément de tenue 2 comporte une tige s'étendant à l'écart de la portion d'extrémité distale 2b de l'élément de tenue 2 jusqu'à une extrémité libre, et comportant de préférence une boucle fermée à son extrémité libre. La tige diffère de la sangle souple 15 en ce qu'elle présente une rigidité suffisante pour permettre un maintien de l'animal à une distance minimale prédéterminée de l'utilisateur, tout en gardant l'animal à une distance maximale prédéterminée de l'utilisateur, avant son éventuelle libération volontaire par l'utilisateur.

Comme il est plus particulièrement visible sur les figures 1 à 5, le dispositif de retenue 1 comporte un lien souple 16 dont une première extrémité 16a est fixée au manchon de verrouillage 10 au moyen d'une goupille transversale 17. Le manchon de verrouillage 10 est agencé à coulissement le long de l'élément de tenue 2 et comporte à une deuxième extrémité 16b un organe de préhension 18 se présentant de préférence sous la forme d'une boucle fermée.

Le lien souple 16 chemine dans un passage interne 2c ménagé dans l'élément de tenue 2 et selon la longueur de ce dernier. En pratique, le passage interne 2c est ici ménagé entre deux épaisseurs de la sangle 15 qui est prise à double. Les deux épaisseurs de la sangle 15 sont reliées entre elles le long de leurs bords (par couture, collage ou soudure par exemple).

La deuxième extrémité 16b du lien souple 16 est située à proximité immédiate de l'extrémité libre 15a de la sangle souple 15, ce qui permet à l'utilisateur d'actionner le lien souple 16 et de tenir le dispositif de retenue 1 (via la boucle fermée 15b ici) avec une seule et même main.

Sur les figures 3 et 5, on voit que le corps longitudinal de base 11 comprend un logement intérieur 110 s'allongeant selon la direction longitudinale l-l et dans lequel coulisse la première extrémité 16a du lien souple 16. Le logement intérieur 110 comprend un tronçon distal 110a et un tronçon proximal 110b. Entre le tronçon distal 110a et le tronçon proximal 110b est prévu un tronçon intermédiaire 110c sensiblement tronconique permettant de faciliter l'introduction du lien souple 16 depuis le tronçon distal 110a dans le tronçon proximal 110b.

On voit plus particulièrement sur la figure 6 que l'élément d'attache 5 est solidaire de façon inséparable du mousqueton 6.

Le deuxième mode de réalisation illustré sur les figures 7 et 8 ne diffère du premier mode de réalisation illustré sur les figures 1 à 6 qu'en ce que ce l'élément d'attache 5 est solidaire de façon inséparable d'un collier 19 pour animal.

Dans un autre mode de réalisation, non illustré sur les figures, l'élément d'attache 5 est solidaire de façon inséparable d'un harnais pour animal.

L'utilisation du dispositif de retenue va désormais être explicitée au moyen des figures 1 à 5.

Lorsqu'un utilisateur maintient son animal (un chien par exemple), le dispositif de retenue 1 se trouve dans la configuration illustrée sur les figures 1 à 3, avec les premiers 3 et deuxièmes 4 moyens d'accrochage en position de retenue.

Le mousqueton 6 est attaché à un collier 19 ou à un harnais porté par l'animal, et l'utilisateur tient dans l'une de ses mains le dispositif de retenue 1 par l'intermédiaire de la boucle fermée 15b.

Lorsque l'animal effectue une traction, les efforts entre les premiers 3 et deuxièmes 4 moyens d'accrochage s'exercent selon la surface de contact mutuel qui est au moins sensiblement en forme de zone sphérique ZS (figure 3) pour réduire efficacement les concentrations de contraintes, et donc réduire les risques de dysfonctionnements et de dégradation (voire de rupture).

Lorsque l'animal effectue des mouvements, la liaison rotule entre les premiers 3 et deuxièmes 4 moyens d'accrochage permet de réduire encore les risques de dysfonctionnements et de dégradation (voire de rupture).

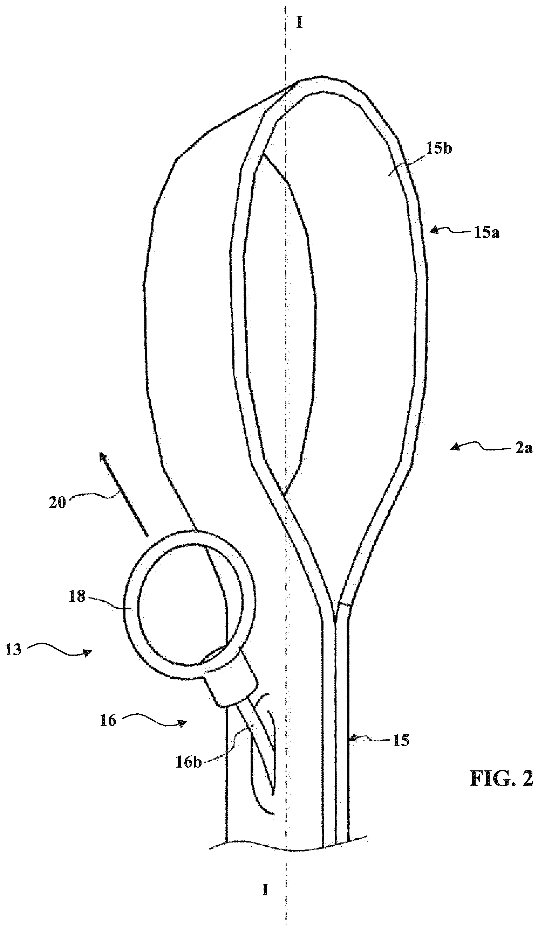

Lorsque l'utilisateur souhaite libérer l'animal, il effectue une traction (illustrée par la flèche 20 sur la figure 2) sur le lien souple 16 des moyens de déplacement 13 pour déplacer le manchon de verrouillage 10 depuis sa position de verrouillage (figure 3) vers sa position de déverrouillage (figure 5). Cette traction sur le lien souple 16 peut être effectuée par l'utilisateur au moyen de l'index de sa main tandis qu'il tient la boucle fermée 15b avec les autres doigts de cette même main. L'utilisateur n'a ainsi pas besoin de sa deuxième main, de sorte que celle-ci peut être utilisée pour une autre action (tenir une lampe afin d'éclairer une zone, ou une arme pour tenir en respect un suspect par exemple).

La traction (flèche 20 sur la figure 2) fait coulisser le lien souple 16 dans le passage interne ménagé dans l'élément de retenue 2 et provoque un coulissement du manchon de verrouillage 10 depuis sa position de verrouillage (figure 3) vers sa position de déverrouillage (figure 5).

Les mors 3a et 3b ne sont alors plus recouverts par le manchon de verrouillage 10 et se déplacent depuis leur position de retenue (figure 3) vers leur position de libération (figure 5) sous l'effet de la traction exercée par l'animal et sous l'effet de la poussée transversale exercée par les premiers moyens de rappel élastiques 9. Les deuxièmes moyens d'accrochage 4 sont alors libérés par les premiers moyens d'accrochage 3, ce qui a pour effet de libérer l'animal.

Lorsque l'utilisateur relâche sa traction sur le lien souple 16, les deuxièmes moyens de rappel élastiques 12 rappellent le manchon de verrouillage 10 depuis sa position de déverrouillage vers sa position de verrouillage : le manchon de verrouillage 10 vient alors recouvrir à nouveau les mors 3a et 3b en les déplaçant depuis leur position de libération vers leur position de retenue à l'encontre des premiers moyens de rappel élastiques 9.

Pour ré-accrocher le mousqueton 6 porté par l'animal afin de retenir à nouveau ce dernier au moyen du dispositif de retenue 1, l'utilisateur saisit le corps longitudinal de base 11 dans une première main, en tenant celui-ci entre la paume de sa main et son auriculaire (et/ou son annulaire) tandis qu'il utilise son index et son pouce de la même main pour tirer le manchon de verrouillage 10 et le coulisser vers sa position de déverrouillage (figure 5). Les mors 3a et 4a des premiers moyens d'accrochage s'ouvrent alors en se déplaçant vers leur position de libération. L'utilisateur peut alors utiliser son autre main pour introduire les deuxièmes moyens d'accrochage 4 entre les mors 3a et 3b des premiers moyens d'accrochage 3.

Cette introduction entre les mors 3a et 3b est facilitée par le deuxième tronçon 80b en demi-boule de l'organe d'accrochage 8. En relâchant le manchon de verrouillage 10, l'utilisateur autorise le retour du manchon de verrouillage 10 poussé par les deuxièmes moyens de rappel élastiques 12 jusqu'à sa position de verrouillage (figure 3) dans laquelle il repousse et maintient les mors 3a et 3b dans leur position de retenue autour des deuxièmes moyens d'accrochage 4.

La présente invention n'est pas limitée aux modes de réalisation qui ont été explicitement décrits, mais elle en inclut les diverses variantes et généralisations contenues dans la portée des revendications ci-après.

## Revendications

1. Dispositif de retenue (1) d'un animal, comprenant :
- un élément de tenue (2) s'étendant entre une portion d'extrémité proximale (2a), adaptée pour être tenue par la main d'un utilisateur, et une portion d'extrémité distale (2b) comportant des premiers moyens d'accrochage (3) réversibles destinés à être sélectivement accrochés à des deuxièmes moyens d'accrochage (4),
- un élément d'attache (5) destiné à être solidarisé à un mousqueton (6), à un collier (19) ou à un harnais pour animal, et comportant les deuxièmes moyens d'accrochage (4) destinés à être accrochés de façon réversible aux premiers moyens d'accrochage (3),
dans lequel :
- les premiers moyens d'accrochage (3) comportent une pluralité de mors (3a, 3b) agencés de façon concentrique autour d'une direction longitudinale (l-l), aptes à être disposés dans une première position dite de retenue, dans laquelle lesdits mors (3a, 3b) sont situés à une première distance radiale (d1) de la direction longitudinale (l-l) et sont conformés pour retenir entre eux les deuxièmes moyens d'accrochage (4), et une deuxième position dite de libération, dans laquelle lesdits mors (3a, 3b) sont situés à une deuxième distance radiale (d2) de la direction longitudinale (l-l), la deuxième distance radiale (d2) étant supérieure à la première distance radiale (d1) et telle que les deuxièmes moyens d'accrochage (4) peuvent échapper hors des premiers moyens d'accrochage (3) par un simple mouvement de translation,
- les premiers (3) et deuxièmes (4) moyens d'accrochage sont conformés de façon à présenter, en position de retenue, une surface de contact mutuel au moins sensiblement en forme de zone sphérique (ZS).

2. Dispositif de retenue (1) selon la revendication 1, **caractérisé en ce que** les premiers (3) et deuxièmes (4) moyens d'accrochage sont conformés de façon à présenter, en position de retenue, une surface de contact mutuel entre les premiers moyens d'accrochage (3) et les deuxièmes moyens d'accrochage (4) réalisant une liaison rotule lorsque les deuxièmes moyens d'accrochage (4) sont retenus par les premiers moyens d'accrochage (3).

3. Dispositif de retenue (1) selon la revendication 1 ou 2, **caractérisé en ce que** les premiers (3) et deuxièmes (4) moyens d'accrochage sont conformés de façon à présenter, en position de retenue, une surface de contact mutuel sensiblement sphérique.

4. Dispositif de retenue (1) selon l'une quelconque des revendications 1 à 3, **caractérisé en ce que** les deuxièmes moyens d'accrochage (4) comprennent un organe d'accrochage (8) s'étendant entre une première extrémité (8a) et une deuxième extrémité (8b) avec :
- un premier tronçon (80a) d'organe d'accrochage (8) dont la section transversale augmente depuis ladite première extrémité (8a) vers ladite deuxième extrémité (8b), le premier tronçon (80a) comportant de préférence une forme de segment sphérique,
- un deuxième tronçon (80b) d'organe d'accrochage (8) prolongeant le premier tronçon (80a) en direction de la deuxième extrémité (8b), dont la section transversale diminue depuis ledit premier tronçon (80a) vers ladite deuxième extrémité (8b).

5. Dispositif de retenue (1) selon l'une quelconque des revendications 1 à 4, **caractérisé en ce que** :
- des premiers moyens de rappel élastiques (9) rappellent en permanence lesdits plusieurs mors (3a, 3b) vers leur position de libération,
- l'élément de tenue (2) comprend un manchon de verrouillage (10), agencé de façon coulissante selon la direction longitudinale (l-l) sur un corps longitudinal de base (11), entre :
a. une première position dite de verrouillage, dans laquelle ledit manchon de verrouillage (10) est à une première distance (D1) d'une extrémité distale (20b) de la portion d'extrémité distale (2b) selon la direction longitudinale (l-l) et recouvre lesdits mors (3a, 3b) disposés en position de retenue et s'oppose à tout déplacement radial des mors (3a, 3b) vers leur position de libération,
b. une deuxième position dite de déverrouillage, dans laquelle ledit manchon de verrouillage (10) est à une deuxième distance (D2) de l'extrémité distale (20b) de la portion d'extrémité distale (2b) selon la direction longitudinale (l-l), supérieure à ladite première distance (D2), et autorise un déplacement radial des mors (3a, 3b) vers leur position de libération.

6. Dispositif de retenue (1) selon la revendication 5, **caractérisé en ce que** :
- des deuxièmes moyens de rappel élastiques (12) rappellent en permanence ledit manchon de verrouillage (10) vers sa position de verrouillage et à recouvrement des mors (3a, 3b), selon une force de rappel qui est suffisante pour amener les mors (3a, 3b) vers leur position de retenue à l'encontre des premiers moyens de rappel élastiques (9),
- des moyens de déplacement (13), manuellement actionnables, permettent à un utilisateur de sélectivement déplacer le manchon de verrouillage (10) vers sa position de déverrouillage à l'encontre des deuxièmes moyens de rappel élastiques (12).

7. Dispositif de retenue (1) selon l'une des revendications 5 ou 6, **caractérisé en ce que** le corps longitudinal de base (11) comporte un épaulement (14) en direction duquel est coulissé le manchon de verrouillage (10) lorsque le manchon de verrouillage (10) est déplacé vers sa position de déverrouillage, ledit épaulement (14) comportant de préférence une section transversale avec au moins une dimension transversale (D14) sensiblement égale ou supérieure à une dimension (D10) d'une section transversale du manchon de verrouillage (10).

8. Dispositif de retenue (1) selon l'une quelconque des revendications 1 à 7, **caractérisé en ce que** chaque mors (3a, 3b) est articulé à pivotement sur le corps longitudinal de base (11) autour d'une direction de pivotement (IV-IV) perpendiculaire à la direction longitudinale (l-l).

9. Dispositif de retenue (1) selon l'une quelconque des revendications 1 à 8, **caractérisé en ce que** l'élément de tenue (2) comporte une sangle souple (15) s'étendant à l'écart de la portion d'extrémité distale (2b) de l'élément de tenue (2) jusqu'à une extrémité libre (15a), et comportant de préférence une boucle fermée (15b) à son extrémité libre (15a).

10. Dispositif de retenue (1) selon l'une quelconque des revendications 1 à 8, **caractérisé en ce que** l'élément de tenue (2) comporte une tige s'étendant à l'écart de la portion d'extrémité distale (2b) de l'élément de tenue (2) jusqu'à une extrémité libre, et comportant de préférence une boucle fermée à son extrémité libre.

11. Dispositif de retenue (1) selon l'une des revendications 9 ou 10, **caractérisé en ce qu'**il comporte un lien souple (16) dont une première extrémité (16a) est fixée au manchon de verrouillage (10), qui est agencé à coulissement le long de l'élément de tenue (2) et qui comporte à une deuxième extrémité (16b) un organe de préhension (18) se présentant de préférence sous la forme d'une boucle fermée.

12. Dispositif de retenue (1) selon la revendication 11, **caractérisé en ce que** l'élément de tenue (2) comporte un passage interne (2c) selon sa longueur dans lequel chemine le lien souple (16), la deuxième extrémité (16b) du lien souple (16) étant de préférence située à proximité immédiate de l'extrémité libre (15a) de la sangle souple (15) ou de la tige.

13. Dispositif de retenue (1) selon l'une quelconque des revendications 1 à 12, **caractérisé en ce que** l'élément d'attache (5) est solidaire de façon inséparable d'un mousqueton (6), d'un collier (19) ou d'un harnais pour animal.
